(19) **Europäisches Patentamt / European Patent Office / Office européen des brevets**

(11) **EP 3 832 641 A1**

(12) # EUROPEAN PATENT APPLICATION
published in accordance with Art. 153(4) EPC

(43) Date of publication:
**09.06.2021 Bulletin 2021/23**

(21) Application number: **19845450.6**

(22) Date of filing: **24.07.2019**

(51) Int Cl.:
*G10K 11/168* (2006.01)     *B32B 5/00* (2006.01)
*B32B 7/02* (2019.01)       *B60R 13/08* (2006.01)
*E04B 1/86* (2006.01)

(86) International application number:
**PCT/JP2019/029059**

(87) International publication number:
**WO 2020/026922 (06.02.2020 Gazette 2020/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **02.08.2018 JP 2018145932**

(71) Applicants:
• **JNC Corporation**
  **Chiyoda-ku**
  **Tokyo 100-8105 (JP)**

• **JNC Fibers Corporation**
  **Tokyo 100-0004 (JP)**

(72) Inventors:
• **HATTORI, Takayuki**
  **Moriyama-shi, Shiga 524-0001 (JP)**
• **ITO, Hidemi**
  **Moriyama-shi, Shiga 524-0001 (JP)**

(74) Representative: **Becker, Eberhard**
  **Becker & Kurig Partnerschaft**
  **Patentanwälte PartmbB**
  **Bavariastrasse 7**
  **80336 München (DE)**

(54) **LAMINATE SOUND-ABSORBING MATERIAL**

(57)     The present invention addresses the problem of providing a sound-absorbing material that has excellent sound absorption in the low-frequency range, the middle-frequency range, the high-frequency range, and the ultra-high-frequency range. A laminate sound-absorbing material that includes a porous layer and a base material layer. The porous layer is a fiber layer or comprises a microporous film. The mean flow pore diameter of the porous layer is 0.1-30 $\mu$m. The basis weight of the porous layer is 0.1-200 g/m². The average sound transmission loss of the base material layer between 1,000 Hz and 12,500 Hz is at least 2 dB. The base material layer is arranged on a sound incidence side, and the porous layer is arranged a sound transmission side.

FIG. 1

**Description**

[Technical Field]

The present invention relates to a sound-absorbing material having a laminate structure in which two or more types of layers are laminated.

[Background Art]

Sound-absorbing materials are components having a function of absorbing sound, and are widely used in the field of construction and the field of automobiles. It is known that a non-woven fabric can be used as a material constituting a sound-absorbing material. For example, Patent Literature 1 discloses a multi-layered article having a sound absorption property, which includes a support layer and a submicron fiber layer laminated on the support layer, and in which the submicron fiber layer has a central fiber diameter of less than 1 $\mu$m and an average fiber diameter in a range of 0.5 to 0.7 $\mu$m, and which is formed by a melt film fibrillation method or an electrospinning method. In an example in Patent Literature 1, a laminate article in which a polypropylene spunbond non-woven fabric having a unit weight (basis weight) of 100 g/m$^2$, and a diameter of about 18 $\mu$m is laminated as a support layer and a submicron polypropylene fiber having a basis weight of 14 to 50 g/m$^2$ and an average fiber diameter of about 0.56 $\mu$m is laminated thereon is disclosed. In addition, in another example, a multi-layered article in which an electrospun polycaprolactone fiber having a basis weight of 6 to 32 g/m$^2$ and an average fiber diameter of 0.60 $\mu$m is laminated on a polyester card processing web having a basis weight of 62 g/m$^2$ is disclosed. A sound absorption property of the multi-layered article produced in the example was measured, and a sound absorption property superior to the sound absorption property of a support alone was exhibited.

In addition, it is also known to use a foam as a sound-absorbing material. For example, Patent Literature 2 discloses a laminate structure for improving acoustic comfort (reduction and optimization of sound reflection components) and thermal comfort, and which includes an organic polymer foam having an open porosity in a specific range as a support layer, a glass cloth having specific ventilation resistance as a surface layer, and a discontinuous adhesion layer between the support layer and the surface layer. It is disclosed that, regarding the organic polymer foam, those including polyurethane, particularly, polyester urethane, neoprene (registered trademark), silicone or melamine, as a basic material, are exemplified, and the density is preferably 10 to 120 kg/m$^3$, and the thickness is preferably 1.5 to 2.5 mm.

Patent Literature 3 discloses a laminate sound absorbing non-woven fabric which absorbs low-frequency and high-frequency sounds, and includes a resonance film and at least one other fiber material layer, and in which the resonance film is formed of a nanofiber layer having a diameter of up to 600 nm and a surface weight (basis weight) of 0.1 to 5 g/m$^2$. It is disclosed that the nanofiber layer is typically created by electrospinning, while a base material layer is formed of a fiber fabric having a diameter of 10 to 45 $\mu$m and a basis weight of 5 to 100 g/m$^2$, and another layer may be additionally laminated thereon. In addition, it is disclosed that more of these laminates may be laminated thereon in order to reach an appropriate thickness and basis weight.

Patent Literature 4 discloses a non-woven fabric structure including nanofibers and having an excellent sound absorption property. The non-woven fabric structure in Patent Literature 4 includes a fibrous component including nanofibers having a fiber diameter of less than 1 $\mu$m, and in which the thickness of the fibrous component is 10 mm or more. In addition, it is disclosed that the fibrous component may be supported on a support or may have a structure in which a fibrous component and a support are repeatedly laminated. It is disclosed that nanofibers are formed by, for example, a melt blown method, and in an example, a layer formed of a nanofibrous component having a fiber diameter of 0.5 $\mu$m and a basis weight of 350 g/m$^2$ is formed on a polypropylene spunlace non-woven fabric as a support.

[Citation List]

[Patent Literature]

    [Patent Literature 1]
    Japanese Patent Laid-Open No. 2014-15042
    [Patent Literature 2]
    Published Japanese Translation No. 2014-529524 of the PCT International Publication
    [Patent Literature 3]
    Published Japanese Translation No. 2008-537798 of the PCT International Publication
    [Patent Literature 4]

Japanese Patent Laid-Open No. 2016-121426

[Summary of Invention]

[Technical Problem]

As described above, non-woven fabric laminates having various configurations have been studied as sound-absorbing materials, and it is known that microfibers called nanofibers or submicron fibers having a fiber diameter of less than 1 $\mu$m can be used. However, a sound-absorbing material having a better sound absorption property, in particular, a laminate sound-absorbing material exhibiting excellent sound absorption performance in all ranges including a low-frequency range of 400 to 1,000 Hz, a middle-frequency range of 1,000 to 3,150 Hz, a high-frequency range of 2,000 to 5,000 Hz, and an ultra-high-frequency range of 5,000 to 12,500 Hz is required. In view of such circumstances, an objective of the present invention is to provide a sound-absorbing material having an excellent sound absorption property in all ranges including a low-frequency range, a middle-frequency range, a high-frequency range, and an ultra-high-frequency range.

[Solution to Problem]

The inventors conducted extensive studies in order to address the above problems. As a result, it was found that, in a laminate sound-absorbing material including a base material layer and a porous layer, when one or more porous layers having a mean flow pore diameter and a basis weight in a specific range are included, and additionally, a base material layer having an average sound transmission loss that is equal to or more than a specific value is combined, the above problems can be addressed, and the present invention is completed.
The present invention has the following configurations.

[1] A laminate sound-absorbing material including a porous layer and a base material layer,

wherein the porous layer is a fiber layer or a layer formed of a microporous film,
wherein the porous layer has a mean flow pore diameter of 0.1 to 30 $\mu$m and a basis weight of 0.1 to 200 g/m$^2$,
wherein the base material layer has an average sound transmission loss of 2 dB or more at 1,000 Hz to 12,500 Hz, and
wherein the base material layer is arranged on a sound incidence side, and the porous layer is arranged on a sound transmission side.

[2] The laminate sound-absorbing material according to [1],
wherein the base material layer is at least one selected from the group consisting of a non-woven fabric, a woven fabric, an expanded foam, and a honeycomb core.
[3] The laminate sound-absorbing material according to [1] or [2],
wherein the porous layer is a fiber layer formed of a non-woven fabric including at least one fiber selected from the group consisting of polyvinylidene fluoride, Nylon 6,6, polyacrylonitrile, polystyrene, polyurethane, polysulfone, polyvinyl alcohol, polyethylene terephthalate, polybutylene terephthalate, polyethylene, and polypropylene.
[4] The laminate sound-absorbing material according to any one of [1] to [3],
wherein the porous layer and the base material layer each include one layer.
[5] The laminate sound-absorbing material according to any one of [1] to [4],
wherein, in a normal incidence sound absorption coefficient measurement method, when a sound absorption coefficient at a frequency of 400 Hz to 1,000 Hz is measured, and an average sound absorption coefficient ($\alpha$) of the sound absorption coefficient is calculated, the value of the average sound absorption coefficient ($\alpha$) satisfies the following formula:

$$1.00 \geq \alpha \geq 0.23$$

[6] The laminate sound-absorbing material according to any one of [1] to [5],
wherein, in a normal incidence sound absorption coefficient measurement method, when a sound absorption coefficient at a frequency of 1,000 Hz to 3,150 Hz is measured, and an average sound absorption coefficient ($\beta$) of the sound absorption coefficient is calculated, the value of the average sound absorption coefficient ($\beta$) satisfies the following formula:

$$1.00 \geq \beta \geq 0.60$$

[7] The laminate sound-absorbing material according to any one of [1] to [6],
wherein, in a normal incidence sound absorption coefficient measurement method, when a sound absorption coefficient at a frequency of 2,000 Hz to 5,000 Hz is measured, and an average sound absorption coefficient ($\gamma$) of the sound absorption coefficient is calculated, the value of the average sound absorption coefficient ($\gamma$) satisfies the following formula:

$$1.00 \geq \gamma \geq 0.85$$

[8] The laminate sound-absorbing material according to any one of [1] to [7],
wherein, in a normal incidence sound absorption coefficient measurement method, when a sound absorption coefficient at a frequency of 5,000 Hz to 12,500 Hz is measured, and an average sound absorption coefficient ($\eta$) of the sound absorption coefficient is calculated, the value of the average sound absorption coefficient ($\eta$) satisfies the following formula:

$$1.00 \geq \eta \geq 0.90$$

[Advantageous Effects of Invention]

According to the present invention having the above configuration, it is possible to realize a sound absorption property in a wide range with a small number of layers in the laminate sound-absorbing material. According to the present invention, there is provided a sound-absorbing material that can be applied to a wide range of applications such as housing-related materials (building materials) and sound-insulating walls in addition to automobile sound-absorbing materials. It is known that road noise, the human voice, the sound of walking on stairs, and the like correspond to sounds in a low-frequency range of about 400 to 1,000 Hz, wind noise and sounds of household appliances such as a ventilating fan, a piano, an acoustic device, and the like correspond to sounds in a middle-frequency range of about 1,000 to 3,150 Hz, wind noise, brake noise, rail gliding sounds of a train and the like correspond to sounds in a high-frequency range of 2,000 to 5,000 Hz, and high-speed rotation motor sounds and switching noise correspond to sounds in an ultra-high-frequency range of 5,000 to 12,500 Hz, and thus the laminate sound-absorbing material of the present invention is useful for countermeasures for such noise.

[Brief Description of Drawings]

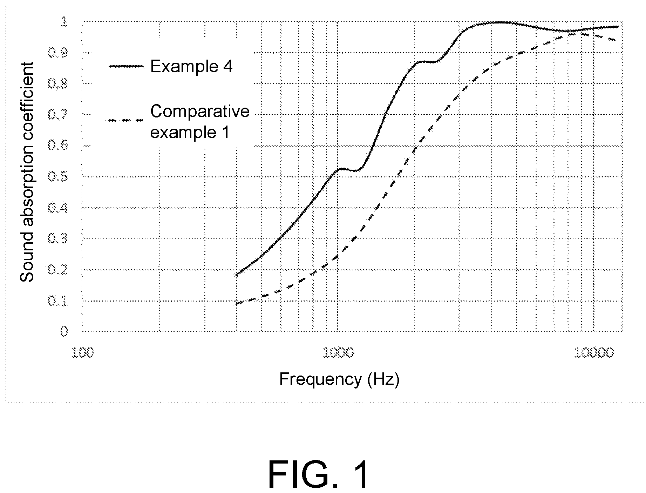

Fig. 1 is a graph showing a sound absorption property of an example (Example 4) of the present invention and a comparative example (Comparative Example 1).

[Description of Embodiments]

Hereinafter, the present invention will be described in detail.

(Structure of laminate sound-absorbing material)

The laminate sound-absorbing material of the present invention is a laminate sound-absorbing material including a porous layer and a base material layer. The porous layer has a mean flow pore diameter of 0.1 to 30 $\mu$m and a basis weight of 0.1 to 200 g/m$^2$. The base material layer has an average sound transmission loss of 2 dB or more at 1,000 Hz to 12,500 Hz. The base material layer is arranged on the sound incidence side, and the porous layer is arranged on the sound transmission side.

In the laminate sound-absorbing material of the present invention, when the sound incidence side and the transmission side are defined such that a material having a high average sound transmission loss is arranged on the incidence side, and a dense and thin material having a small mean flow pore diameter is arranged on the transmission side, an improved sound absorption property in a wide range is realized. The laminate sound-absorbing material of the present invention is preferably formed by laminating one base material layer and one porous layer. The porous layer may be composed of one layer or may be composed of two or more layers. Similarly, the base material layer may be composed of one layer or may be composed of two or more layers.

The laminate sound-absorbing material of the present invention may include components other than the porous layer and the base material layer as long as the effects of the present invention are not impaired. For example, additional porous layers outside the scope defined in the present invention (one layer or two or more layers may be used), a protective layer, a printing layer, a foam, a mesh, a woven fabric and the like may be included. In addition, an adhesive, a clip, a suture and the like for connecting respective layers may be included.

Here, in this specification, "the base material layer is on the sound incidence side, and the porous layer is on the sound transmission side" indicates a relative positional relationship in which, in the laminate sound-absorbing material, the base material layer is disposed on the sound incidence side of the porous layer (in other words, the porous layer is disposed on the sound transmission side of the base material layer). That is, not only a typical laminate form of (incidence side) base material layer/porous layer (transmission side) but also laminate forms of (incidence side) base material layer/other layer/base material layer/porous layer (transmission side), (incidence side) base material layer/porous layer/other layer (transmission side), (incidence side) other layer/base material layer/porous layer/other layer (transmission side), and (incidence side) base material layer/other layer/porous layer/other layer (transmission side), and the like are included.

The layers constituting the laminate sound-absorbing material may be physically and/or chemically adhered, or may not be adhered. A form in which some gaps between the layers of the laminate sound-absorbing material are adhered, and some are not adhered may be used. For the adhesion, for example, in a process of forming the porous layer, or a post-process, heating is performed, a part of the material constituting the porous layer is melted, the porous layer is fused to the other layer, and thus the porous layer and the other layer may be adhered. In addition, it is possible to apply an adhesive to the surface of the layers to adhere the layers.

The thickness of the laminate sound-absorbing material is not particularly limited as long as the effects of the present invention are obtained, and may be, for example, 3 to 50 mm, and is preferably 5 to 30 mm, and in consideration of space saving, 5 to 20 mm is more preferable. Here, the thickness of the laminate sound-absorbing material means a total thickness of the porous layer and the base material layer, and when an exterior body such as a cartridge and a lid is attached, the thickness of that part is not included.

(Porous layer)

The porous layer included in the laminate sound-absorbing material of the present invention is a fiber layer or a layer formed of a microporous film, and has a mean flow pore diameter of 0.1 to 30 $\mu$m, and more preferably 0.2 to 20 $\mu$m. When the mean flow pore diameter is 0.2 $\mu$m or more, the decrease in the sound absorption coefficient due to sound reflection can be minimized, and when the mean flow pore diameter is 20 $\mu$m or less, the flow resistance can be controlled, and thus the sound absorption coefficient can increase. In addition, the porous layer may have a basis weight of 0.1 to 200 g/m$^2$. When the basis weight is 0.1 g/m$^2$ or more, the flow resistance can be controlled, and thus the sound absorption coefficient can increase, and when the basis weight is 200 g/m$^2$ or less, the thickness of the sound-absorbing material can be kept thin.

Typical examples of a specific porous layer that achieves both the mean flow pore diameter and basis weight include a fiber layer and a microporous film.

The fiber layer used in the present invention is generally a fiber aggregate composed of fibers having an average fiber diameter of less than 500 nm. When the average fiber diameter is less than 500 nm, this is preferable because an improved sound absorption property is obtained, and when the average fiber diameter is less than 450 nm, this is more preferable because a further improved sound absorption property is obtained. The lower limit of the average fiber diameter is not particularly limited, and when the average fiber diameter is 10 nm or more, the fibers are easily used because the processability is excellent. The average fiber diameter can be measured by a known method. The average fiber diameter is, for example, a value obtained by measurement or calculation from an enlarged picture of the surface of the fiber layer, and the detailed measurement method will be described in examples.

The fiber aggregate constituting the fiber layer is preferably a non-woven fabric, and is not particularly limited as long as it has a fiber diameter and a basis weight within the above ranges, and is preferably a melt blown non-woven fabric, a microfiber non-woven fabric formed by an electrospinning method, or the like. According to the electrospinning method, the microfibers can be laminated as a fiber aggregate on the base material layer with high efficiency. Details of the electrospinning method will be described in detail in the production method.

When the fiber layer is a melt blown non-woven fabric, the resin used as a material of fibers constituting the fiber layer is not particularly limited as long as the effects of the invention are obtained. Examples thereof include polyesters such as a polyolefin resin, polyurethane, polylactic acid, an acrylic resin, polyethylene terephthalate, and polybutylene terephthalate, Nylons (amide resin) such as Nylon 6, Nylon 6,6, and Nylon 1,2, and polyphenylene sulfide, polyvinyl alcohol, polystyrene, polysulfone, liquid crystal polymers, a polyethylene-vinyl acetate copolymer, polyacrylonitrile, polyvinylidene fluoride, and polyvinylidene fluoride-hexafluoropropylene. Examples of polyolefin resins include polyethylene and polypropylene. Examples of polyethylene include low-density polyethylene (LDPE), high-density polyethylene (HDPE), and linear low-density polyethylene (LLDPE). Examples of polypropylene include homopolymers of propylene and copolymerized polypropylene in which propylene and other monomers, ethylene, butene, and the like are polymerized. The fiber aggregate preferably contains one type of the above resins, but may contain two or more types thereof.

When the fiber layer is the melt blown non-woven fabric, the basis weight is particularly 50 to 200 g/m$^2$, and more preferably 60 to 150 g/m$^2$. Use of the melt blown non-woven fabric is advantageous in that it has a small mean flow pore diameter and can be produced in conventional facilities compared with nanofibers, and thus a relatively inexpensive laminate sound-absorbing material can be realized.

When the fiber layer is a non-woven fabric produced by the electrospinning method, the resin used as a material of fibers constituting the fiber layer is not particularly limited as long as the effects of the invention are obtained, and examples thereof include polyolefins such as polypropylene and polyethylene, polyesters such as polyurethane, polylactic acid, an acrylic resin, polyethylene terephthalate, and polybutylene terephthalate, Nylons (amide resin) such as Nylon 6, Nylon 6,6, and Nylon 1,2, and polyphenylene sulfide, polyvinyl alcohol, polystyrene, polysulfone, liquid crystal polymers, a polyethylene-vinyl acetate copolymer, polyacrylonitrile, polyvinylidene fluoride, and a polyvinylidene fluoride copolymer such as polyvinylidene fluoride-hexafluoropropylene. Among these, polyvinylidene fluoride, polyvinylidene fluoride-hexafluoropropylene, Nylon 6,6, polyacrylonitrile, polystyrene, polyurethane, polysulfone and polyvinyl alcohol are more preferable because they are soluble in various solvents in the electrospinning method.

The fiber preferably contains one type of the above resins but may contain two or more types thereof.

When the fiber layer is a non-woven fabric produced by the electrospinning method, the basis weight is particularly 0.1 to 10 g/m$^2$ and more preferably 0.1 to 5.0 g/m$^2$. Use of the non-woven fabric produced by the electrospinning method is advantageous in that a non-woven fabric layer having a small mean flow pore diameter and a small basis weight can be obtained and a thin laminate sound-absorbing material can be realized.

The microporous film used in the present invention is not particularly limited to the raw material of the microporous film, and for example, polytetrafluoroethylene, polyamide, polyimide, polyolefin, polycarbonate and the like are used alone or a mixture thereof is used, and polytetrafluoroethylene (hereinafter abbreviated as "PTFE") is preferably included in consideration of durability and a PTFE product is more preferable. A method of producing a PTFE microporous film that is preferably used is not particularly limited, and an extended PTFE microporous film is preferable in order to minimize the dimensional change.

The microporous film may be produced by a known method, or a commercially available product can be applied, and for example, Poreflon (commercially available from Sumitomo Electric Industries, Ltd.), a membrane filter (commercially available from Advantec Co., Ltd.), and the like can be used. As necessary, known additives such as a non-fibrous material (for example, low-molecular-weight PTFE), a UV absorber, a light stabilizer, an antistatic agent, an antifog additive, and a color pigment may be added to the microporous film within a range in which the objective of the present invention is achieved and the effects thereof are not impaired.

In addition, the microporous film may have a single layer structure or a combination of two or more layers as necessary. Two or more layers are preferable in order to prevent propagation of defects even if defects such as voids and pinholes occur.

In addition to the above examples, various additives other than the resin may be added to the porous layer. Examples of additives that can be added to the resin include a filler, a stabilizer, a plasticizer, an adhesive, an adhesion promoting agent (for example, a silane and a titanate), silica, glass, clay, talc, a pigment, a colorant, an antioxidant, a fluorescent brightening agent, an antibacterial agent, surfactants, flame retardants, and a fluoropolymer. One or more of the above additives may be used to reduce the weight and/or cost of the obtained fibers and layers, to adjust the viscosity or modify thermal characteristics of the fibers, or to impart various physical property activities derived from characteristics of the additives, including electrical characteristics, optical characteristics, density characteristics, and liquid barrier or adhesiveness characteristics.

(Base material layer)

The base material layer in the laminate sound-absorbing material has a sound absorption property and also has a function of supporting the porous layer and maintaining the shape of the entire sound-absorbing material. In the laminate sound-absorbing material of the present invention, the porous layer is a fiber layer that is a fiber aggregate formed of fibers having a very small fiber diameter or a microporous film, and thus the strength (rigidity) is low. Therefore, the base material layer substantially supports the strength of the laminate sound-absorbing material.

A base material layer having an average sound transmission loss of 2 dB or more at 1,000 Hz to 12,500 Hz is used. In the present invention, when the base material layer having an average sound transmission loss of 2 dB or more is used, if it is combined with the porous layer, it is possible to obtain excellent sound absorption performance in an unexpectedly wide frequency range. Regarding the base material layer, typically, a structure such as a non-woven fabric, a fabric, an expanded foam or a honeycomb core can be used, and there is no particular limitation as long as a porous layer can be laminated on at least one surface thereof. In particular, it is preferable to use at least one of a non-woven fabric and an expanded foam. The base material layer included in the laminate sound-absorbing material may be of one type or two or more types of base material layers may be suitably included.

The upper limit of the average sound transmission loss of the base material layer is not particularly limited. Generally, the average sound transmission loss is a parameter indicating sound insulation performance, and the base material layer used in the present invention has a certain level or more of sound insulation performance. However, even if the average sound transmission loss of the base material layer exceeds 2 dB, the base material layer alone cannot always exhibit a sufficient sound absorption property in a wide frequency range. In the present invention, a sound absorption property in an unexpectedly wide range is realized according to a combination of such a base material layer and a dense porous layer.

Regarding a method of measuring an average sound transmission loss, known methods can be used. Details will be described in examples.

When the base material layer is a non-woven fabric, a melt blown non-woven fabric, an airlaid non-woven fabric, a spunlace non-woven fabric, a spunbond non-woven fabric, a through-air non-woven fabric, a thermal bond non-woven fabric, a needle punch non-woven fabric, or the like can be used, and appropriately selected depending on desired physical properties and functions.

Regarding the resin constituting the fibers of the non-woven fabric of the base material layer, a thermoplastic resin can be used, and examples thereof include a polyolefin resin, a polyester resin such as polyethylene terephthalate, and a polyamide resin. Examples of polyolefin resins include homopolymers of ethylene, propylene, butene-1, or 4-methylpentene-1, and random or block copolymers of these and other $\alpha$-olefins, that is, one or more of ethylene, propylene, butene-1, pentene-1, hexene-1 and 4-methylpentene-1, copolymers in which these are combined, and mixtures thereof. Examples of polyamide resins include Nylon 4, Nylon 6, Nylon 7, Nylon 11, Nylon 12, Nylon 6,6, Nylon 6,10, polymetaxylylene adipamide, polyparaxylylene decanamide, polybiscyclohexylmethane decanamide and copolyamides thereof. Examples of polyester resins include polytetramethylene terephthalate, polybutyl terephthalate, polyethylene oxybenzoate, poly(1,4-dimethylcyclohexane terephthalate) and copolymers thereof in addition to polyethylene terephthalate. Among these, preferably, a polyethylene terephthalate fiber, a polybutylene terephthalate fiber, a polyethylene fiber and polypropylene fiber may be used alone or two or more thereof may be used in combination. In addition, a glass fiber, a carbon fiber, a metal fiber, and the like are preferably used.

Even if the base material layer is a woven fabric, fibers composed of the same resin can be used.

Regarding the fibers constituting the non-woven fabric of the base material layer, fibers composed of a single component can be used. However, in consideration of effects of fusion at the intersection of fibers, fibers composed of a composite component including a low melting point resin and a high melting point resin, that is, composite fibers including two or more components having different melting points, are preferably used. Examples of composite forms include a sheath-core type, an eccentric sheath-core type, and a parallel type. In addition, regarding fibers constituting the non-woven fabric of the base material layer, fibers in which two or more components having different melting points are mixed are preferably used. Here, the mixed fibers are fibers in which fibers made of a high melting point resin and fibers made of a low melting point resin exist independently and are mixed. Even if the base material is a woven fabric, the same fibers can be used.

The fiber diameter of the fibers constituting the non-woven fabric of the base material layer is not particularly limited, but fibers having a fiber diameter of 500 nm to 1 mm can be used. A fiber diameter of 500 nm to 1 mm means that the average fiber diameter is within this numerical value range. When the fiber diameter is 500 nm or more, it is possible to control flow resistance due to a density difference between the porous layer and the fibers constituting the non-woven fabric of the base material layer, and when the fiber diameter is less than 1 mm, the versatility is not lost and procurement becomes easy. The fiber diameter is more preferably 1.0 to 100 $\mu$m because in this case it is possible to control flow resistance due to a density difference between the porous layer and the fibers constituting the non-woven fabric of the base material layer and procurement becomes easy. The fiber diameter can be measured by the same method as in the measurement of the fiber diameter of the porous layer. Even if the base material is a woven fabric, the same fibers can be used.

When the base material layer is a fabric, a fabric obtained by weaving a plain weave, a basket plain weave, a twill weave, a satin weave, a mock leno weave, or the like can be used, and appropriately selected depending on desired physical properties and functions. Regarding the fabric, for example, a glass cloth produced using a glass yarn or a mesh obtained by plain weaving or twill weaving fibers made of a metal wire or a resin can be used.

When the base material layer is an expanded foam, it can be used without particular limitation as long as it is a resin foam in which a gas is finely dispersed in a resin and which is molded into a foam shape or a porous shape. Regarding the resin foam, for example, a soft polyurethane foam, a hard polyurethane foam, a melamine foam, a polystyrene foam, a silicone foam, a polyvinyl chloride foam, an acrylic foam, and a urea foam can be used. The expanded foam is preferably a foamed resin having open cells (communication holes).

Specific examples of the resin constituting the expanded foam include a polyolefin resin, a polyurethane resin, and a melamine resin. Examples of polyolefin resins include homopolymers of ethylene, propylene, butene-1, or 4-methylpentene-1, and random or block copolymers of these and other $\alpha$-olefins, that is, one or more of ethylene, propylene, butene-1, pentene-1, hexene-1 and 4-methylpentene-1, copolymers in which these are combined, and mixtures thereof.

The basis weight of the base material layer is 1 $g/m^2$ or more, preferably 1 to 300 $g/m^2$, and more preferably 15 to 300 $g/m^2$. When the basis weight of the base material layer is less than 1 $g/m^2$, there is a risk of the strength required for the sound-absorbing material not being obtained.

In the present invention, the thickness of the base material layer is not particularly limited, and since most of the thickness of the base material layer is the thickness of the laminate sound-absorbing material, the thickness is preferably 3 to 30 mm and more preferably 3 to 20 mm in consideration of space saving. When the base material layer is composed of two or more structures, the thickness per sheet is, for example, 20 $\mu$m to 20 mm, and more preferably 30 $\mu$m to 10 mm. When the thickness per sheet is 20 $\mu$m or more, wrinkles do not occur, handling is easy, and the productivity is favorable, and when the thickness per sheet is 20 mm or less, there is no risk of hindering space saving.

Various additives, for example, a colorant, an antioxidant, a light stabilizer, a UV absorber, a neutralizer, a nucleating agent, a lubricant, an antibacterial agent, a flame retardant, a plasticizer and other thermoplastic resins may be added to the base material layer as long as the effects of the present invention are not impaired. In addition, the surface may be treated with various finishing agents, and thus functions such as a water repellence property, an anti-static property, surface smoothness, and wear resistance may be imparted.

(Sound absorption property of laminate sound-absorbing material)

The laminate sound-absorbing material of the present invention has improved sound absorption performance in all ranges including a low-frequency range of 400 to 1,000 Hz, a middle-frequency range of 1,000 to 3,150 Hz, a high-frequency range of 2,000 to 5,000 Hz, and an ultra-high-frequency range of 5,000 to 12,500 Hz. Without being bound by a specific theory, it is thought that, in the laminate sound-absorbing material of the present invention, when a material having a high sound transmission loss is arranged on the sound incidence side and a material having a small mean flow pore diameter is arranged on the transmission side, the flow resistance is controlled and an improved sound absorption property is obtained.

A method of evaluating a sound absorption property will be described in examples.

(Method of producing laminate sound-absorbing material)

A method of producing a laminate sound-absorbing material is not particularly limited, and the material can be obtained by, for example, a method of forming a porous layer on a base material layer or a method in which a porous layer is prepared on another support, and a base material layer and the porous layer supported on the support are integrated.

When a non-woven fabric is used as the base material layer, a non-woven fabric may be produced using a known method and used, or a commercially available non-woven fabric can be selected and used. In addition, regarding a process of forming a porous layer on the base material layer, an electrospinning method is preferably used. The electrospinning method is a method in which a spinning solution is discharged, an electric field is applied, and the discharged spinning solution is formed into fibers, and the fibers are obtained on a collector. Examples thereof include a method in which a spinning solution is pushed out from a nozzle and an electric field is applied for spinning, a method in which a spinning solution is bubbled and an electric field is applied for spinning, and a method in which a spinning solution is guided on the surface of a cylindrical electrode and an electric field is applied for spinning. In the present invention, a porous layer can be formed by inserting a non-woven fabric that becomes the base material layer on the collector, and accumulating fibers on the base material layer.

The spinning solution is not particularly limited as long as it has spinnability, but is preferably a solution containing a polymer, for example, a solution in which a polymer resin is dispersed in a solvent, a solution in which a polymer resin is dissolved in a solvent, a solution in which a polymer resin is melted by heating or laser irradiation, or the like can be used.

Examples of a solvent in which a resin is dispersed or dissolved include water, methanol, ethanol, propanol, acetone, N,N-dimethylformamide, N,N-dimethylacetamide, dimethyl sulfoxide, N-methyl-2-pyrrolidone, toluene, xylene, pyridine, formic acid, acetic acid, tetrahydrofuran, dichloromethane, chloroform, 1,1,2,2-tetrachloroethane, 1,1,1,3,3,3-hexafluoroisopropanol, trifluoroacetic acid and mixtures thereof. The mixing ratio when solvents are mixed and used is not particularly limited, and can be appropriately set in consideration of the required spinnability and dispersibility, and physical properties of the obtained fibers.

In order to improve electrospinning stability and a fiber forming property, the spinning solution may further contain a surfactant. Examples of surfactants include an anionic surfactant such as sodium dodecyl sulfate, a cationic surfactant such as tetrabutylammonium bromide, and a nonionic surfactant such as polyoxyethylene sorbitamon monolaurate. The concentration of the surfactant is preferably in a range of 5 weight% or less with respect to the spinning solution. When the concentration is 5 weight% or less, this is preferable because the commensurate effect in use is improved. In addition, as long as the effects of the present invention are not significantly impaired, components other than the above components may be contained as components of the spinning solution.

A method of preparing a spinning solution is not particularly limited, and examples thereof include a stirring method and an ultrasonic treatment method. In addition, the order of mixing in is not particularly limited, and simultaneous mixing or sequential mixing may be performed. A stirring time when the spinning solution is prepared by stirring is not particularly limited as long as the resin is uniformly dissolved or dispersed in the solvent, and for example, stirring may be performed for about 1 to 24 hours.

In order to obtain fibers by electrospinning, the viscosity of the spinning solution is preferably prepared such that it is within a range of 10 to 10,000 cP, and more preferably within a range of 50 to 8,000 cP. When the viscosity is 10 cP or more, spinnability for forming fibers is obtained, and when the viscosity is 10,000 cP or less, the spinning solution is easily discharged. When the viscosity is in a range of 50 to 8,000 cP, this is more preferable because favorable spinnability is obtained in a wide spinning condition range. The viscosity of the spinning solution can be adjusted by appropriately changing the molecular weight and concentration of the resin, the type of the solvent, and the mixing ratio.

The spinning solution may be spun at room temperature or may be spun after being heated or cooled. Examples of a method of discharging a spinning solution include a method of discharging a spinning solution filled into a syringe from a nozzle using a pump. The inner diameter of the nozzle is not particularly limited, and is preferably in a range of 0.1 to 1.5 mm. In addition, a discharge amount is not particularly limited, but is preferably 0.1 to 10 mL/hr.

A method of applying an electric field to the spinning solution is not particularly limited as long as an electric field can be formed in a nozzle and a collector. For example, a high voltage may be applied to the nozzle, and the collector may be grounded. The applied voltage is not particularly limited as long as fibers are formed, and is preferably in a range of 5 to 100 kV. In addition, the distance between the nozzle and the collector is not particularly limited as long as fibers are formed, and is preferably in a range of 5 to 50 cm.

When the porous layer and the base material layer that are separately prepared are laminated and integrated, the integration method is not particularly limited, and the layers may be simply laminated without adhesion, and various adhesion methods, that is, thermocompression bonding using a heated flat roller and embossing roller, adhesion using a hot melt agent or a chemical adhesive, and thermal adhesion using circulating hot air or radiant heating can be used. In order to reduce deterioration of physical properties of the porous layer including microfibers, a heat treatment using circulating hot air or radiant heating is preferable among the above methods. In the case of thermocompression bonding using a flat roller and an embossing roller, it is necessary to adjust the processing temperature so that the porous layer does not melt into a film or damage such as breakage on a part near the embossing point is avoided. In addition, in the case of adhesion using a hot melt agent or a chemical adhesive, it is necessary to perform processing so that voids of the porous layer are not filled with these agents and the performance does not deteriorate. On the other hand, when integration is performed by a heat treatment using circulating hot air or radiant heating, this is preferable because there is little damage to the porous layer and it is possible to perform integration with sufficient peeling strength between layers. When integration is performed by a heat treatment using circulating hot air or radiant heating, a non-woven fabric or a laminate composed of heat-fusible composite fibers is preferably used without particular limitation.

[Examples]

Hereinafter, the present invention will be described in more detail with reference to examples, and the following examples are only for illustrative purposes. The scope of the present invention is not limited to the examples.

Methods of measuring values of physical properties and definitions used in examples are shown below.

<Average fiber diameter>

A fiber structure (non-woven fabric) was observed using a scanning electron microscope SU8020 (commercially available from Hitachi High-Technologies Corporation), and the diameter of 50 fibers was measured using image analysis software. The average value of fiber diameters of 50 fibers was used as an average fiber diameter.

<Mean flow pore diameter>

A mean flow pore diameter was measured (JIS K 3822) using Capillary Flow Porometer (CFP-1200-A, commercially available from POROUS MATERIAL).

<Measurement of sound absorption coefficient>

For measurement a sound absorption coefficient, a sample having a diameter of 16.6 mm was taken from fiber laminates laminated under conditions, and a normal incidence sound absorption coefficient when a plane sound wave was vertically incident on a test piece at a frequency of 400 to 12,500 Hz was measured using a normal incidence sound absorption coefficient measuring device WinZacMTX (commercially available from Nihon Onkyo Engineering Co., Ltd.) according to ASTM E 1050.

<Sound absorption property in low-frequency range>

A sound absorption coefficient at a frequency of 400 Hz to 1,000 Hz was measured, the obtained curve was defined as f(x), and an average sound absorption coefficient ($\alpha$) was calculated according to the following Formula 1.
The average sound absorption coefficient ($\alpha$) indicates sound absorption performance in a frequency range of 400 to 1,000 Hz, and if the numerical value was high, it was determined that the sound absorption property was improved. When $\alpha$ was 0.23 or more, the sound absorption property in the low-frequency range was evaluated as favorable, and when $\alpha$ was less than 0.23, the sound absorption property was evaluated as poor.

[Math. 1]

$$\alpha = \frac{\int_{400}^{1000} f(x)\,dx}{600}$$

<Sound absorption property in middle-frequency range>

A sound absorption coefficient at a frequency of 1,000 Hz to 3,150 Hz was measured, the obtained curve was defined as f(x), and an average sound absorption coefficient ($\beta$) was calculated according to the following Formula 2.
The average sound absorption coefficient ($\beta$) indicates a sound absorption performance in a frequency range of 1,000 to 3,150 Hz, and if the numerical value was high, it was determined that the sound absorption property was improved. When $\beta$ was 0.60 or more, the sound absorption property in the middle-frequency range was evaluated as favorable, and when $\beta$ was less than 0.60, the sound absorption property was evaluated as poor.

[Math. 2]

$$\beta = \frac{\int_{1000}^{3150} f(x)\,dx}{2150}$$

<Sound absorption property in high-frequency range>

A sound absorption coefficient at a frequency of 2,000 Hz to 5,000 Hz was measured, the obtained curve was defined as f(x), and the average sound absorption coefficient ($\gamma$) was calculated according to the following Formula 3.
The average sound absorption coefficient ($\gamma$) indicates sound absorption performance in a frequency range of 2,000 to 5,000 Hz, and if the numerical value was high, it was determined that the sound absorption property was improved. When $\gamma$ was 0.85 or more, the sound absorption property in the high-frequency range was evaluated as favorable, and when $\gamma$ was less than 0.85, the sound absorption property was evaluated as poor.

[Math. 3]

$$\gamma = \frac{\int_{2000}^{5000} f(x)\,dx}{3000}$$

<Sound absorption property in ultra-high-frequency range>

A sound absorption coefficient at a frequency of 5,000 Hz to 12,500 Hz was measured, the obtained curve was defined as f(x), and an average sound absorption coefficient (η) was calculated according to the following Formula 4.

The average sound absorption coefficient (η) indicates sound absorption performance in a frequency range of 5,000 to 12,500 Hz, and if the numerical value was high, it was determined that the sound absorption property was improved. When η was 0.90 or more, the sound absorption property in the ultra-high-frequency range was evaluated as favorable, and when η was less than 0.90, the sound absorption property was evaluated as poor.

[Math. 4]

$$\eta = \frac{\int_{5000}^{12500} f(x)\, dx}{7500}$$

<Measurement of average sound transmission loss>

For measurement an average sound transmission loss, a sample having a diameter of 16.6 mm was taken from each base material layer, and a normal incidence sound absorption coefficient measuring device "WinZacMTX" (commercially available from Nihon Onkyo Engineering Co., Ltd.) was used for measurement. The measurement was performed based on ASTM E 1050, a back space layer (0 mm and 10 mm) was changed when the normal incidence sound absorption coefficient was measured, the dependence of the sound transmission loss on the frequency was measured at 1,000 Hz to 12,500 Hz, and the obtained curve was defined as g(x). In addition, the average sound transmission loss θ was calculated according to the following Formula 5.

[Math. 5]

$$\theta = \frac{\int_{1000}^{12500} g(x)\, dx}{11500}$$

<Preparation of protective layer>

Regarding a protective layer, a commercially available polyethylene terephthalate card method through-air non-woven fabric (with a basis weight of 18 g/m$^2$ and a thickness of 60 $\mu$m) was prepared.

<Preparation of porous layer>

1) Porous layers A to C (microfiber non-woven fabric produced by an electrospinning method)

Kynar (product name) 3120, which is polyvinylidene fluoride-hexafluoropropylene (hereinafter abbreviated as "PVDF," commercially available from Arkema) was dissolved in a cosolvent (60/40 (w/w)) of N,N-dimethylacetamide and acetone at a concentration of 15 mass% to prepare an electrospinning solution, and 0.01 mass% of a conductive agent was added. The PVDF-HFP solution was electrospun on a protective layer to produce a fiber laminate composed of two layers: the protective layer and PVDF-HFP microfibers. In electrospinning conditions, a 24G needle was used, the amount of a solution supplied per single hole was 3.0 mL/h, the applied voltage was 35 kV, and the spinning distance was 17.5 cm.

Regarding the PVDF microfiber layers in the fiber laminate, the basis weight of the layer was 0.6 g/m$^2$, the average fiber diameter was 80 nm, and the melting temperature was 168°C. The resulting fibers were used for a porous layer A. The mean flow pore diameter was evaluated as 1.5 $\mu$m.

In addition, the transport speed of the protective layer was changed so that the basis weight was adjusted to 0.2 g/m$^2$, and the resulting fibers were used for a porous layer B. The average fiber diameter of the porous layer B was 80 nm, the melting temperature was 168°C, and the mean flow pore diameter was evaluated as 5.8 $\mu$m. In addition, the basis weight was adjusted to 6.0 g/m$^2$, and the resulting fibers were used for a porous layer C. The average fiber diameter of the porous layer C was 80 nm, the melting temperature was 168°C, and the mean flow pore diameter was evaluated as 0.7 $\mu$m.

2) Porous layers D to F (microporous film)

The mean flow pore diameter of MEMBRANE FILTER T300A (commercially available ADVANTEC, a pore size of 3.0 $\mu$m and a thickness of 75 $\mu$m) was evaluated as 1.1 $\mu$m. The resulting fibers were used for a porous layer D. Similarly, the mean flow pore diameter of T100A (a pore size of 1.0 $\mu$m and a thickness of 77 $\mu$m) was evaluated as 0.53 $\mu$m. The resulting fibers were used for a porous layer E. Similarly, the mean flow pore diameter of T010A (a pore size of 0.1 $\mu$m and a thickness of 80 $\mu$m) was evaluated as 0.20 $\mu$m. The resulting fibers were used for a porous layer F.

3) Porous layer J (melt blown non-woven fabric)

In order to form a porous layer, a non-woven fabric production device including two extruders including a screw (a diameter of 50 mm), a heating component and a gear pump, a spinneret for mixed fibers (a pore diameter of 0.3 mm, 501 holes through which a resin is alternately discharged from two extruders are arranged in a row, and an effective width of 500 mm), a compressed air generating device and an air heating machine, a collection conveyor including a polyester net and a winder was used.

Regarding a raw material polypropylene, a polypropylene homopolymer 1 (MFR=82 g/10 min) and a polypropylene homopolymer 2 ("FR-185"(MFR=1,400 g/10 min) commercially available from LOTTE CHEMICAL) were used, two types of polypropylene were put into two extruders of the non-woven fabric production device, the extruders were heated to 240°C, the resin was melted, the mass ratio of the gear pump was set to 50/50, and the molten resin was discharged from the spinneret at a spinning speed of 0.3 g/min per single hole. The discharged fibers were blown from the spinneret with compressed air heated to 400°C and with a gauge pressure of 98 kPa onto the collection conveyor at a distance of 60 cm to form a porous layer. The basis weight was set to 80 g/m$^2$ by adjusting the speed of the collection conveyor. The average fiber diameter was 1.3 $\mu$m, the resulting fibers were used for a porous layer J. The mean flow pore diameter was evaluated as 9.4 $\mu$m.

4) Porous layer R (melt blown non-woven fabric)

In order to form a porous layer, a non-woven fabric production device including two extruders including a screw (a diameter of 50 mm), a heating component and a gear pump, a spinneret for mixed fibers (a pore diameter of 0.3 mm, 501 holes through which a resin is alternately discharged from two extruders are arranged in a row, and an effective width of 500 mm), a compressed air generating device and an air heating machine, a collection conveyor including a polyester net and a winder was used.

Regarding a raw material polypropylene, a polypropylene homopolymer 1 (MFR=82 g/10 min) and a polypropylene homopolymer 2 ("FR-185"(MFR=1,400 g/10 min) commercially available from LOTTE CHEMICAL) were used, two types of polypropylene were put into two extruders of the non-woven fabric production device, the extruders were heated to 240°C, the resin was melted, the mass ratio of the gear pump was set to 50/50, and the molten resin was discharged from the spinneret at a spinning speed of 0.3 g/min per single hole. The discharged fibers were blown from the spinneret with compressed air heated to 400°C and with a gauge pressure of 63 kPa onto the collection conveyor at a distance of 60 cm to form a porous layer. The basis weight was set to 80 g/m$^2$ by adjusting the speed of the collection conveyor. The average fiber diameter was 1.9 $\mu$m, the resulting fibers were used for a porous layer R. The mean flow pore diameter was evaluated as 12.6 $\mu$m.

5) Porous layer P (melt blown non-woven fabric)

In order to form a porous layer, a non-woven fabric production device including two extruders including a screw (a diameter of 50 mm), a heating component and a gear pump, a spinneret for mixed fibers (a pore diameter of 0.3 mm, 501 holes through which a resin is alternately discharged from two extruders are arranged in a row, and an effective width of 500 mm), a compressed air generating device and an air heating machine, a collection conveyor including a polyester net and a winder was used.

Regarding a raw material polypropylene, polypropylene of a polypropylene homopolymer 1 (MFR=82 g/10 min) was put into two extruders, the extruders were heated to 240°C, the resin was melted, the mass ratio of the gear pump was set to 50/50, and the molten resin was discharged from the spinneret at a spinning speed of 0.3 g/min per single hole. The discharged fibers were blown from the spinneret with compressed air heated to 400°C and with a gauge pressure of 63 kPa onto the collection conveyor at a distance of 30 cm to form a porous layer. The basis weight was set to 60 g/m$^2$ by adjusting the speed of the collection conveyor. The average fiber diameter was 4.0 $\mu$m, and the resulting fibers were used for a porous layer P. The mean flow pore diameter was evaluated as 20 $\mu$m.

6) Film (non-porous thin film outside the range of the porous layer)

An unstretched polypropylene film (product name "25SS" commercially available from OJK, and a thickness of 25 μm) was prepared.

7) Porous layer Q (melt blown non-woven fabric outside the range of the porous layer)

In order to form a porous layer, a non-woven fabric production device including two extruders including a screw (a diameter of 50 mm), a heating component and a gear pump, a spinneret for mixed fibers (a pore diameter of 0.3 mm, 501 holes through which a resin is alternately discharged from two extruders are arranged in a row, and an effective width of 500 mm), a compressed air generating device and an air heating machine, a collection conveyor including a polyester net and a winder was used.

Regarding a raw material polypropylene, polypropylene of a polypropylene homopolymer 1 (MFR=82 g/10 min) was put into two extruders, the extruders were heated to 240°C, the resin was melted, the mass ratio of the gear pump was set to 50/50, and the molten resin was discharged from the spinneret at a spinning speed of 0.3 g/min per single hole. The discharged fibers were blown from the spinneret with compressed air heated to 400°C and with a gauge pressure of 63 kPa onto the collection conveyor at a distance of 60 cm to form a porous layer. The basis weight was set to 60 g/m$^2$ by adjusting the speed of the collection conveyor. The average fiber diameter was 4.0 μm, and the resulting fibers were used for a porous layer Q. The mean flow pore diameter was evaluated as 34 μm.

<Preparation of base material layer>

1) Base material layers A to C (airlaid non-woven fabric)

A high-density polyethylene "M6900" (MFR 17 g/10 minutes, commercially available from Keiyo Polyethylene) was used as a high-density polyethylene, a polypropylene homopolymer "SA3A" (MFR=11 g/10 min, commercially available from Japan Polypropylene Corporation) was used as a polypropylene, and a sheath-core type heat-fusible composite fiber having a fiber diameter of 16 μm and including a sheath component formed of a high-density polyethylene and a core component formed of polypropylene was produced according to a hot melt spinning method. A card method through-air non-woven fabric having a basis weight of 200 g/m$^2$, a thickness of 5 mm, and a width of 1,000 mm was produced using the obtained sheath-core type heat-fusible composite fiber. The card method through-air non-woven fabric was crushed to a size of about 6 mm using a uniaxial crusher (ES3280, commercially available from Syoken Co., Ltd.).

The crushed non-woven fabric was heated in an airlaid testing machine at a set temperature of 142°C, and a base material layer A having a basis weight of 160 g/m$^2$, a thickness of 5 mm, and a sound transmission loss of 1.3 dB, a base material layer B having a basis weight of 320 g/m$^2$, a thickness of 10 mm, and a sound transmission loss of 2.4 dB, and a base material layer C having a basis weight of 480 g/m$^2$, a thickness of 15 mm, and a sound transmission loss of 3.5 dB were obtained.

2) Base material layers D to H, M (melamine expanded foam)

Regarding a commercially available melamine foamed resin material, a base material layer D (Basotect BAF-10G+ (commercially available from Inoac Corporation, a density of 9.2 kg/m$^3$) and having a thickness of 10 mm and a sound transmission loss of 2.5 dB, a base material layer E having a thickness of 15 mm and a sound transmission loss of 3.0 dB, a base material layer H having a thickness of 5 mm and a sound transmission loss of 1.1 dB, a base material layer F (BAF-10W (a density of 9.0 kg/m$^3$)) having a thickness of 10 mm and a sound transmission loss of 2.8 dB, a base material layer G having a thickness of 15 mm and a sound transmission loss of 4.1 dB, and a base material layer M having a thickness of 5 mm and a sound transmission loss of 1.0 dB were used.

3) Base material layers I to K (urethane expanded foam)

Regarding a commercially available urethane foamed resin material, a base material I (Calm Flex F-2 (density of 25 kg/m$^3$), commercially available from Inoac Corporation) and having a thickness of 10 mm and a sound transmission loss of 3.1 dB, a base material layer J having a thickness of 15 mm and a sound transmission loss of 4.3 dB, and a base material layer K having a thickness of 20 mm and a sound transmission loss of 6.1 dB were used.

4) Base material layer L (glass fiber mat)

Regarding a commercially available glass fiber material, Aclear mat (commercially available from Asahi Fiber Glass Co., Ltd.) was processed to have a thickness of 50 mm, a basis weight of 320 g/m$^2$, a thickness of 20 mm, and a sound transmission loss of 6.6 dB to obtain a base material layer L.

<Examples 1 to 17>

The base material layer and the porous layer were laminated according to combinations shown in Tables 1 and 2 to obtain sound absorption coefficient measurement samples. The base material layer was arranged on the sound incidence side and the porous layer was arranged on the sound transmission side, and the sound absorption coefficient was measured according to the above method. Tables 1 and 2 show the average sound absorption coefficients in the low-frequency range, the middle-frequency range, the high-frequency range, and the ultra-high-frequency range. Here, in the tables, the total thickness (mm) of the laminate sound-absorbing material is a total thickness of the base material layer and the porous layer. However, since the porous layers A to C were extremely thin, the thickness of the base material layer and the total thickness were the same numerical value.

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Base material layer | Type | Base material layer B | Base material layer C | Base material layer F | Base material layer G | Base material layer D | Base material layer E | Base material layer I | Base material layer J | Base material layer K | Base material layer L |
| | Basis weight (gsm) | 320 | 480 | 90 | 135 | 92 | 138 | 250 | 375 | 500 | 320 |
| | Thickness (mm) | 10.0 | 15.0 | 10.0 | 15.0 | 10.0 | 15.0 | 10.0 | 15.0 | 20.0 | 20.0 |
| | Sound transmission loss (dB) | 2.4 | 3.5 | 2.8 | 4.1 | 2.5 | 3.0 | 3.1 | 4.3 | 6.1 | 6.6 |
| Porous layer | Type | Porous layer A | Porous layer A | Porous layer A | Porous layer A | Porous layer A | Porous layer A | Porous layer A | Porous layer A | Porous layer A | Porous layer A |
| | Fiber diameter ($\mu$m) | 0.08 | 0.08 | 0.08 | 0.08 | 0.08 | 0.08 | 0.08 | 0.08 | 0.08 | 0.08 |
| | Basis weight (gsm) | 0.6 | 0.6 | 0.6 | 0.6 | 0.6 | 0.6 | 0.6 | 0.6 | 0.6 | 0.6 |
| | Mean flow pore diameter ($\mu$) | 1.5 | 1.5 | 1.5 | 1.5 | 1.5 | 1.5 | 1.5 | 1.5 | 1.5 | 1.5 |
| Laminate sound-absorbing material | Total thickness (mm) | 10.0 | 15.0 | 10.0 | 15.0 | 10.0 | 15.0 | 10.0 | 15.0 | 20.0 | 20.0 |
| | | | | | | | | | | | |

(continued)

|  |  | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Average sound absorption coefficient | Low frequency of 400 to 1,000 Hz | 0.264 | 0.314 | 0.270 | 0.340 | 0.268 | 0.307 | 0.268 | 0.312 | 0.241 | 0.396 |
|  | Middle frequency of 1,000 to 3,150 Hz | 0.695 | 0.763 | 0.678 | 0.750 | 0.665 | 0.694 | 0.734 | 0.767 | 0.679 | 0.822 |
|  | High frequency of 2,000 to 5,000 Hz | 0.918 | 0.946 | 0.907 | 0.940 | 0.891 | 0.908 | 0.931 | 0.949 | 0.859 | 0.971 |
|  | Ultra-high frequency of 5,000 to 12,500 Hz | 0.962 | 0.983 | 0.955 | 0.981 | 0.947 | 0.974 | 0.963 | 0.984 | 0.965 | 0.998 |
| Evaluation of sound absorption coefficient | Low frequency of 400 to 1,000 Hz | ○ | ○ | ○ | ○ | ○ | ○ | ○ | ○ | ○ | ○ |
|  | Middle frequency of 1,000 to 3,150 Hz | ○ | ○ | ○ | ○ | ○ | ○ | ○ | ○ | ○ | ○ |
|  | High frequency of 2,000 to 5,000 Hz | ○ | ○ | ○ | ○ | ○ | ○ | ○ | ○ | ○ | ○ |
|  | Ultra-high frequency of 5,000 to 12,500 Hz | ○ | ○ | ○ | ○ | ○ | ○ | ○ | ○ | ○ | ○ |

[Table 2]

| | | Example 11 | Example 12 | Example 13 | Example 14 | Example 14-1 | Example 15 | Example 16 | Example 17 |
|---|---|---|---|---|---|---|---|---|---|
| Base material layer | Type | Base material layer C | Base material layer C | Base material layer C | Base material layer C | Base material layer C | Base material layer J | Base material layer J | Base material layer J |
| | Basis weight (gsm) | 480 | 480 | 480 | 480 | 480 | 375 | 375 | 375 |
| | Thickness (mm) | 15.0 | 15.0 | 15.0 | 15.0 | 15.0 | 15.0 | 15.0 | 15.0 |
| | Sound transmission loss (dB) | 3.5 | 3.5 | 3.5 | 3.5 | 3.5 | 4.3 | 4.3 | 4.3 |
| Porous layer | Type | Porous layer B | Porous layer C | Porous layer R | Porous layer J | Porous layer P | Porous layer D | Porous layer E | Porous layer F |
| | Fiber diameter ($\mu$m) | 0.08 | 0.08 | 1.9 | 1.3 | 4.0 | - | - | - |
| | Basis weight (gsm) | 0.2 | 6 | 80 | 80 | 60 | 26 | 31 | 82 |
| | Mean flow pore diameter ($\mu$) | 5.8 | 0.7 | 12.6 | 9.4 | 20 | 1.1 | 0.53 | 0.2 |
| | Total thickness (mm) | 15.0 | 15.0 | 17.0 | 17.2 | 15.5 | 15.1 | 15.1 | 15.1 |
| | | | | | | | | | |

(continued)

| | | Example 11 | Example 12 | Example 13 | Example 14 | Example 14-1 | Example 15 | Example 16 | Example 17 |
|---|---|---|---|---|---|---|---|---|---|
| Average sound absorption coefficient | Low frequency of 400 to 1,000 Hz | 0.324 | 0.386 | 0.376 | 0.378 | 0.281 | 0.288 | 0.301 | 0.317 |
| | Middle frequency of 1,000 to 3,150 Hz | 0.778 | 0.838 | 0.837 | 0.842 | 0.710 | 0.730 | 0.728 | 0.780 |
| | High frequency of 2,000 to 5,000 Hz | 0.954 | 0.931 | 0.961 | 0.970 | 0.912 | 0.902 | 0.920 | 0.943 |
| | Ultra-high frequency of 5,000 to 12,500 Hz | 0.989 | 0.928 | 0.963 | 0.968 | 0.955 | 0.939 | 0.925 | 0.908 |
| Evaluation of sound absorption coefficient property | Low frequency of 400 to 1,000 Hz | ○ | ○ | ○ | ○ | ○ | ○ | ○ | ○ |
| | Middle frequency of 1,000 to 3,150 Hz | ○ | ○ | ○ | ○ | ○ | ○ | ○ | ○ |
| | High frequency of 2,000 to 5,000 Hz | ○ | ○ | ○ | ○ | ○ | ○ | ○ | ○ |
| | Ultra-high frequency of 5,000 to 12,500 Hz | ○ | ○ | ○ | ○ | ○ | ○ | ○ | ○ |

<Comparative Example 1>

A commercially available polypropylene resin non-woven fabric (Thinsulate T2203, commercially available from 3M, a fiber diameter of 0.7 $\mu$m to 4.0 $\mu$m, and a thickness of 29 mm) was punched out into a circle to obtain a sound absorption coefficient measurement sample.

The normal incidence sound absorption coefficient was measured, the sound absorption property in the low-frequency range (an average value $\alpha$ from 400 Hz to 1,000 Hz) was evaluated as 0.157, the sound absorption property in the middle-frequency range (an average value $\beta$ from 1,000 Hz to 3,150 Hz) was evaluated as 0.519, the sound absorption property in the high-frequency range (an average value $\gamma$ from 2,000 Hz to 5,000 Hz) was evaluated as 0.763, and the sound absorption property in the ultra-high-frequency range (an average value $\eta$ from 5,000 Hz to 12,500 Hz) was evaluated as 0.953.

<Comparative Examples 2 to 9>

The base material layer and the porous layer were laminated according to combinations shown in Table 3 to obtain the sound absorption coefficient measurement sample or the base material layer alone was used. The base material layer was arranged on the sound incidence side and the porous layer was arranged on the sound transmission side, and the sound absorption coefficient was measured according to the above method. Table 3 shows the average sound absorption coefficients in the low-frequency range, the middle-frequency range, the high-frequency range, and the ultra-high-frequency range.

[Table 3]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Base material layer | Type | - | Base material layer A | Base material layer C | Base material layer H | Base material layer G | Base material layer M | Base material layer C | Base material layer C | Base material layer J |
| | Basis weight (gsm) | - | 160 | 480 | 45 | 135 | 46 | 480 | 480 | 375 |
| | Thickness (mm) | - | 5.0 | 15.0 | 5.0 | 15.0 | 5.0 | 15.0 | 15.0 | 15.0 |
| | Sound transmission loss (dB) | - | 1.3 | 3.5 | 1.1 | 4.1 | 1.0 | 3.5 | 3.5 | 4.3 |
| Porous layer | Type | PP fiber non-woven fabric (commercia 1 product) | Porous layer A | PP film | Porous layer A | PP film | Porous layer A | Porous layer Q | - | - |
| | Fiber diameter (μm) | 0.7-4.0 | 0.08 | - | 0.08 | - | 0.08 | 4.0 | - | - |
| | Basis weight (gsm) | 230 | 0.6 | - | 0.6 | - | 0.6 | 60 | - | - |
| | Mean flow pore diameter (μ) | 13.1 | 1.5 | 0 | 1.5 | 0 | 1.5 | 34 | - | - |
| | Total thickness (mm) | 28.0 | 5.0 | 15.0 | 5.0 | 15.0 | 10.0 | 16.6 | 15.0 | 15.0 |
| | | | | | | | | | | |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Average sound absorption coefficient | Low frequency of 400 to 1,000 Hz | 0.157 | 0.210 | 0.312 | 0.162 | 0.197 | 0.191 | 0.223 | 0.218 | 0.218 |
| | Middle frequency of 1,000 to 3,150 Hz | 0.519 | 0.630 | 0.798 | 0.541 | 0.591 | 0.581 | 0.641 | 0.636 | 0.581 |
| | High frequency of 2,000 to 5,000 Hz | 0.763 | 0.884 | 0.948 | 0.815 | 0.838 | 0.849 | 0.849 | 0.847 | 0.762 |
| | Ultra-high frequency of 5,000 to 12,500 Hz | 0.935 | 0.953 | 0.897 | 0.855 | 0.938 | 0.947 | 0.951 | 0.950 | 0.913 |
| Evaluation of sound absorption coefficient property | Low frequency of 400 to 1,000 Hz | × | × | ○ | × | × | × | × | × | × |
| | Middle frequency of 1,000 to 3,150 Hz | × | ○ | ○ | × | × | × | ○ | ○ | × |
| | High frequency of 2,000 to 5,000 Hz | × | ○ | ○ | × | × | × | × | × | × |
| | Ultra-high frequency of 5,000 to 12,500 Hz | ○ | ○ | × | × | ○ | ○ | ○ | ○ | ○ |

**Claims**

1. A laminate sound-absorbing material including a porous layer and a base material layer,
   wherein the porous layer is a fiber layer or a layer formed of a microporous film,
   wherein the porous layer has a mean flow pore diameter of 0.1 to 30 $\mu$m and a basis weight of 0.1 to 200 g/m$^2$,
   wherein the base material layer has an average sound transmission loss of 2 dB or more at 1,000 Hz to 12,500 Hz, and
   wherein the base material layer is arranged on a sound incidence side, and the porous layer is arranged on a sound transmission side.

2. The laminate sound-absorbing material according to claim 1,
   wherein the base material layer is at least one selected from the group consisting of a non-woven fabric, a woven fabric, an expanded foam, and a honeycomb core.

3. The laminate sound-absorbing material according to claim 1 or 2,
   wherein the porous layer is a fiber layer formed of a non-woven fabric including at least one fiber selected from the group consisting of polyvinylidene fluoride, Nylon 6,6, polyacrylonitrile, polystyrene, polyurethane, polysulfone, polyvinyl alcohol, polyethylene terephthalate, polybutylene terephthalate, polyethylene, and polypropylene.

4. The laminate sound-absorbing material according to any one of claims 1 to 3,
   wherein the porous layer and the base material layer each include one layer.

5. The laminate sound-absorbing material according to any one of claims 1 to 4,
   wherein, in a normal incidence sound absorption coefficient measurement method, when a sound absorption coefficient at a frequency of 400 Hz to 1,000 Hz is measured, and an average sound absorption coefficient ($\alpha$) of the sound absorption coefficient is calculated, the value of the average sound absorption coefficient ($\alpha$) satisfies the following formula:

$$1.00 \geq \alpha \geq 0.23.$$

6. The laminate sound-absorbing material according to any one of claims 1 to 5,
   wherein, in a normal incidence sound absorption coefficient measurement method, when a sound absorption coefficient at a frequency of 1,000 Hz to 3,150 Hz is measured, and an average sound absorption coefficient ($\beta$) of the sound absorption coefficient is calculated, the value of the average sound absorption coefficient ($\beta$) satisfies the following formula:

$$1.00 \geq \beta \geq 0.60.$$

7. The laminate sound-absorbing material according to any one of claims 1 to 6,
   wherein, in a normal incidence sound absorption coefficient measurement method, when a sound absorption coefficient at a frequency of 2,000 Hz to 5,000 Hz is measured, and an average sound absorption coefficient ($\gamma$) of the sound absorption coefficient is calculated, the value of the average sound absorption coefficient ($\gamma$) satisfies the following formula:

$$1.00 \geq \gamma \geq 0.85.$$

8. The laminate sound-absorbing material according to any one of claims 1 to 7,
   wherein, in a normal incidence sound absorption coefficient measurement method, when a sound absorption coefficient at a frequency of 5,000 Hz to 12,500 Hz is measured and an average sound absorption coefficient ($\eta$) of the sound absorption coefficient is calculated, the value of the average sound absorption coefficient ($\eta$) satisfies the following formula:

$$1.00 \geq \eta \geq 0.90.$$

FIG. 1

## INTERNATIONAL SEARCH REPORT

| | International application No. |
|---|---|
| | PCT/JP2019/029059 |

**A. CLASSIFICATION OF SUBJECT MATTER**
Int.Cl. G10K11/168(2006.01)i, B32B5/00(2006.01)i, B32B7/02(2019.01)i, B60R13/08(2006.01)i, E04B1/86(2006.01)i

According to International Patent Classification (IPC) or to both national classification and IPC

**B. FIELDS SEARCHED**

Minimum documentation searched (classification system followed by classification symbols)
Int.Cl. G10K11/168, B32B5/00, B32B7/02, B60R13/08, E04B1/86

Documentation searched other than minimum documentation to the extent that such documents are included in the fields searched
Published examined utility model applications of Japan      1922–1996
Published unexamined utility model applications of Japan    1971–2019
Registered utility model specifications of Japan            1996–2019
Published registered utility model applications of Japan    1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-535024 A (PRECISION FABRICS GROUP, INC.) 09 September 2013, entire text, all drawings & US 2010/0314195 A1, entire text, all drawings & WO 2011/155963 A1 & EP 2419898 A1 | 1-8 |
| A | WO 2015/080963 A1 (ASAHI KASEI CORPORATION) 28 May 2015, entire text, all drawings & US 2015/0144674 A1, entire text, all drawings & EP 3074095 A1 & CN 105764574 A | 1-8 |

☒ Further documents are listed in the continuation of Box C.      ☐ See patent family annex.

| | |
|---|---|
| *     Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 04.09.2019 | 17.09.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2019/029059

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2017-500767 A (DONALESON COMPANY, INC.) 05 January 2017, entire text, all drawings & US 2016/0247499 A1, entire text, all drawings & WO 2015/057693 A1 & KR 10-2016-0072144 A & CN 105682914 A | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014015042 A
- JP 2014529524 PCT
- JP 2008537798 PCT
- JP 2016121426 A